# EUROPEAN PATENT APPLICATION

(11) **EP 2 927 712 A1**
(43) Date of publication of application: **07.10.2015**
(21) Application number: 15160401.4
(22) Date of filing: 23.03.2015
(51) Int. Cl.: G01T 7/00

(54) **Radiation monitoring system, method, and program**

(30) Priority: 01.04.2014 JP 2014075646
(71) Applicant: Kabushiki Kaisha Toshiba, Tokyo 105-8001 (JP)
(72) Inventor: Sakai, Hirotaka, Tokyo, 105-8001 (JP); Hattori, Kanako, Tokyo, 105-8001 (JP); Umemura, Norihiro, Tokyo, 105-8001 (JP); Nakazono, Shinichiro, Tokyo, 105-8001 (JP); Nitta, Yoshiyuki, Tokyo, 105-8001 (JP); Kitazono, Hideyuki, Tokyo, 105-8001 (JP)
(74) Representative: Granleese, Rhian Jane

(57) **Abstract**

A radiation monitoring system includes: a signal transmitting unit gives a discrimination ID of a sensor that detects radiation, to a data signal based on an output of the sensor, and transmits the data signal to a lower network; a calculation unit calculates various amounts on a basis of the data signal that is received via the lower network using the discrimination ID as a key, and transmits the various amounts to an upper network; and a display unit displays information on the various amounts that are received via the upper network using the discrimination ID as a key.

## Description

### CROSS-REFERENCE TO RELATED APPLICATIONS

This application is based upon and claims the benefit of priority from Japanese Patent application No. 2014-075646, filed on April 1, 2014, the entire contents of each of which are incorporated herein by reference.

### BACKGROUND OF THE INVENTION

### Field of the Invention

An embodiment of the present invention relates to a radiation monitoring technique of measuring radiation and radioactivity in buildings and during processes in nuclear power plants and nuclear facilities or measuring environmental radiation and environmental radioactivity in local regions.

### Description of the Related Art

A radiation monitoring system has a unit configuration in terms of hardware, a sensor that outputs the signal and a processing system that performs logical calculation on the signal correspond one-to-one to each other. According to the unit configuration the radiation monitoring system can take measure against noise of a faint signal outputted by a sensor, sensor calibration, and the like.

Meanwhile, disclosed is a technique of utilizing network communication to perform integrated radiation monitoring in a plurality of bases dispersed over a wide region.

An example of the radiation monitoring system is disclosed in Japanese Patent Laid-Open No. 2013-3078.

Unfortunately, because a radiation monitoring system in a conventional network has the above-mentioned unit configuration, signal processing is fixed, and system expandability and maintainability are insufficient.

### SUMMARY OF THE INVENTION

An embodiment of the present invention, which has been made in view of the above-mentioned circumstances, has an object to provide a radiation monitoring technique excellent in system expandability and maintainability, in which a controller on a network also processes a signal outputted from each radiation sensor located at a terminal end of a system.

### BRIEF DESCRIPTION OF THE DRAWINGS

Fig. 1 is a block diagram illustrating a radiation monitoring system according to an embodiment of the present invention;
Fig. 2 is a configuration diagram of a sensor applied to the radiation monitoring system;
Fig. 3 is a graph showing intensity of a pulse outputted by the sensor with respect to a time axis;
Fig. 4 is a graph showing energy distribution of radiation that enters the sensor;
Fig. 5 is a configuration diagram illustrating an embodiment of a signal transmitting unit of the sensor applied to the radiation monitoring system;
Fig. 6 is a configuration diagram illustrating an embodiment of the signal transmitting unit of the sensor applied to the radiation monitoring system;
Fig. 7 is a configuration diagram illustrating an embodiment of the signal transmitting unit of the sensor applied to the radiation monitoring system;
Fig. 8 is a configuration diagram illustrating an embodiment of the signal transmitting unit of the sensor applied to the radiation monitoring system;
Fig. 9 is a configuration diagram illustrating an embodiment of the signal transmitting unit of the sensor applied to the radiation monitoring system;
Fig. 10 is a configuration diagram illustrating an embodiment of the signal transmitting unit of the sensor applied to the radiation monitoring system;
Fig. 11 is a configuration diagram illustrating an embodiment of the signal transmitting unit of the sensor applied to the radiation monitoring system;
Fig. 12 is a configuration diagram illustrating an embodiment of the signal transmitting unit of the sensor applied to the radiation monitoring system; and
Fig. 13 is an explanatory diagram of a certification method of the sensor applied to the radiation monitoring system.

### DETAILED DESCRIPTION OF THE PREFERRED EMBODIMENTS

Hereinafter, an embodiment of the present invention is described with reference to the attached drawings.

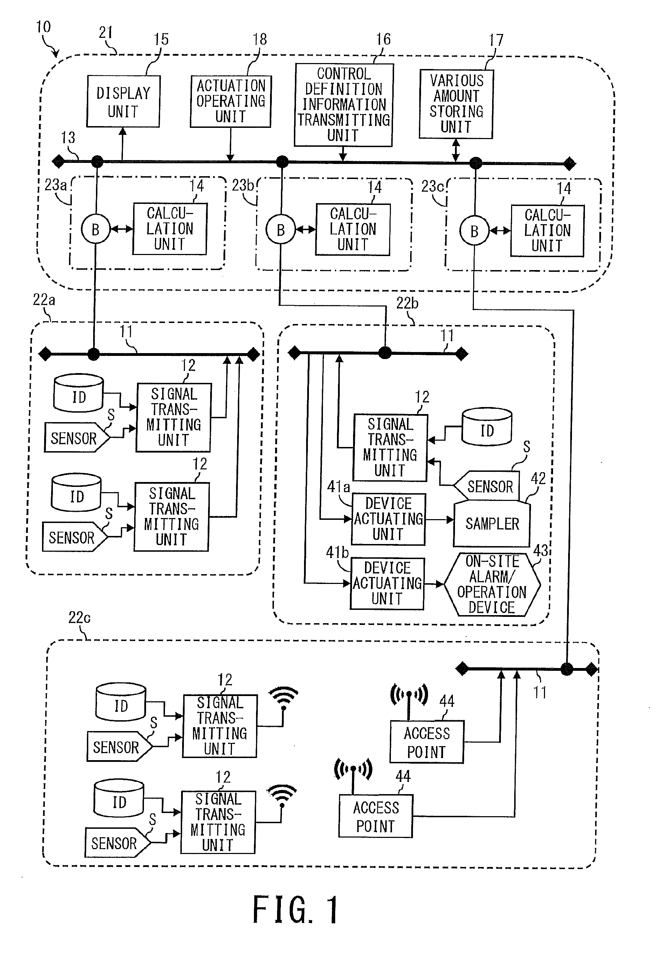

As illustrated in Fig. 1, a radiation monitoring system 10 includes a signal transmitting unit 12, a calculation unit 14, and a display unit 15. The signal transmitting unit 12 gives a discrimination ID of a sensor S that detects radiation, to a data signal based on an output of the sensor S, and transmits the data signal to a lower network 11. The calculation unit 14 calculates various amounts on the basis of the data signal that is received via the lower network 11 using the discrimination ID as a key, and transmits the various amounts to an upper network 13. The display unit 15 displays information on the various amounts that are received via the upper network 13 using the discrimination ID as a key.

The radiation monitoring system 10 is formed in a wide region extending over: monitored areas 22 (22a, 22b, 22c) that are a plurality of dispersed areas in each of which the lower network 11 is laid; and a central control area 21 in which the upper network 13 is laid.

At least one sensor S provided in each monitored area 22 continuously monitors an air radiation dose of the monitored area 22.

Such sensors S are roughly classified into sensors that use measurement of electric charges ionized by radiation and sensors that use light emission excited by ionization.

The sensors S that use measurement of ionized electric charges are further classified into sensors that use gas ionization and sensors that use solid ionization.

Examples of the sensors S that use measurement of electric charges of ionized gas include an ionization chamber, a GM counter, and a proportional counter. Examples of the sensors S that use measurement of electric charges of ionized solid include a semiconductor detector.

Examples of the sensors S that use light emission excited by ionization include a scintillation detector.

Such a large variety of sensors S have performances different from one another.

A plurality of sensors S of different type are placed in combination in each of the monitored areas 22 (22a, 22b, 22c) such that respective performances thereof complement one another.

Alternatively, a plurality of sensors S of the same type are placed in each monitored area 22, in order to secure redundancy.

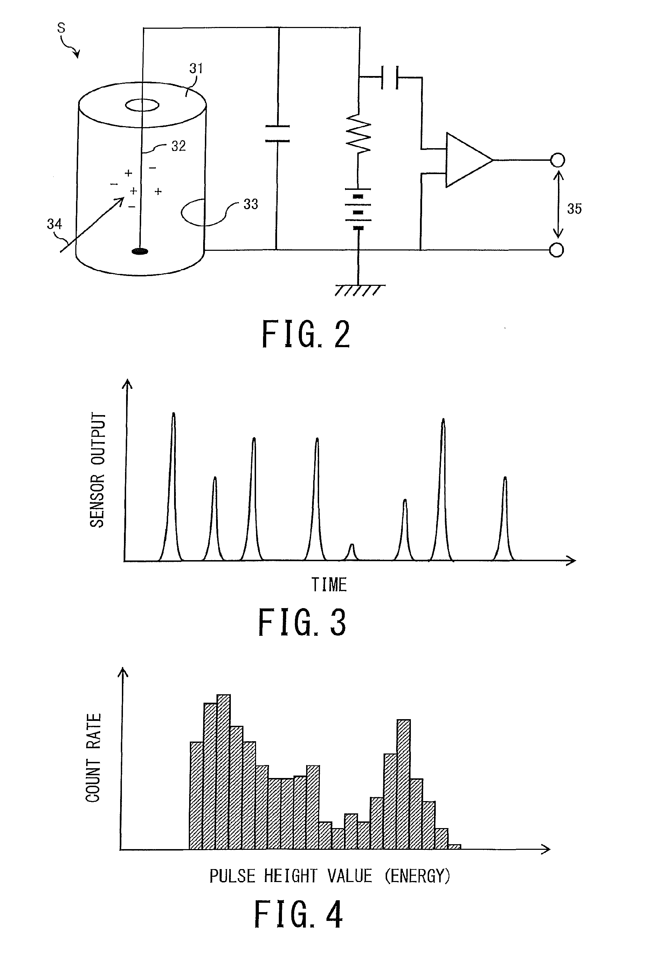

With reference to Fig. 2, Fig. 3, and Fig. 4, an example principle of radiation measurement by the proportional counter is described as a representative of the large variety of sensors S.

As illustrated in Fig. 2, a cylindrical container 31 of the proportional counter (sensor S) is hermetically filled with gas, a potential of a peripheral electrode 33 is set to a ground level, and a potential of a central electrode 32 provided along a central axis is set to a high potential level.

If a radiation 34 enters the inside of the cylindrical container 31, gas atoms are ionized into pairs of an electron and a positive ion.

The electrons generated by the ionization travel toward the central electrode 32 due to an action of an electric field. If the electric field is sufficiently large, the number of the pairs of an electron and an ion is increased by an electron avalanche phenomenon, and a pulsed output 35 whose intensity is proportional to energy of the entering radiation 34 is obtained.

A graph of Fig. 3 shows intensity of a pulse outputted by the sensor S with respect to a time axis. A crest value of the pulse corresponds to the energy of the entering radiation 34.

Crest values respectively resulting from a plurality of the radiations 34 that enter within a period divided at a regular interval are sent to a pulse height analyzer (not illustrated).

The pulse height analyzer allocates the crest values in accordance with values thereof for each channel divided at a predetermined interval, and counts a frequency of crest values for each channel.

As a result, a graph showing energy distribution of the entering radiations 34 is obtained as shown in Fig. 4. If such energy distribution of the radiations 34 is known, a nuclide of a radiation source can be identified.

Such analysis of the energy distribution of the radiations 34 can be performed using not only the proportional counter but also the semiconductor detector, the ionization chamber, and the scintillation detector.

Meanwhile, in the GM counter, intensity of an output does not reflect energy of radiation, and hence the number of pulse signals outputted within a period divided at a regular interval is counted.

The signal transmitting unit 12 (Fig. 1) gives a discrimination ID of the sensor S that detects radiation, to a data signal based on an output of the sensor S, and transmits the data signal to the lower network 11.

Here, in a case where the sensor S is the GM counter, the data signal based on the output of the sensor S is the counted number of pulse signals outputted within a period divided at a regular interval. Even if the sensor S is not the GM counter, the same applies to a case where detailed crest value information is not used and where the number of pulse signals within a period divided at a regular interval is counted, the pulse signals each having a pulse height equal to or more than a given pulse height.

The signal transmitting unit 12 also gives time information to the data signal of the counted number, together with the discrimination ID of the corresponding sensor S, and transmits the data signal to the lower network 11.

Here, in a case where the sensor S is the proportional counter, the semiconductor detector, and the scintillation detector capable of energy distribution analysis, the data signal based on the output of the sensor S is a crest value of a pulse signal and generation time information of the pulse (see Fig. 3).

The signal transmitting unit 12 transmits the data signal of the crest value to the lower network 11 together with the discrimination ID of the corresponding sensor S.

Alternatively, in a case where the sensor S is such a sensor capable of energy distribution analysis, the data signal based on the output of the sensor S may be the number of crest values counted for each channel within a zone divided at a regular interval (see Fig. 4).

The signal transmitting unit 12 gives channel information and time information to the data signal of the counted number, together with the discrimination ID of the corresponding sensor S, and transmits the data signal to the lower network 11.

Controllers 23 (23a, 23b, 23c) are placed in the central control area 21, and are connected to the upper network 13.

Each of the controllers 23 (23a, 23b, 23c) is provided with a communication unit B that connects the lower network 11 provided in the corresponding monitored area 22 (22a, 22b, 22c), the upper network 13, and the calculation unit 14 to one another.

The calculation unit 14 and the communication unit B can be implemented as software on each controller 23 by a processor and a memory controlled by programs.

Here, the controllers 23 (23a, 23b, 23c) are placed in the central control area 21, but may be dispersedly placed in the monitored areas 22 (22a, 22b, 22c) if there is any placement restriction.

The calculation unit 14 receives a data signal transmitted by the sensor S provided in the corresponding monitored area 22 via the lower network 11, and calculates various amounts of radiation and radioactivity.

Examples of the various amounts of radiation and radioactivity include amounts expressed by units such as sievert per hour (Sv/h), becquerel (Bq), and becquerel per cubic meter (Bq/m³).

Sievert per hour (Sv/h) is a unit of a numerical value indicating how much a human body is influenced by exposure to air radiation per unit time, and is used as units such as an ambient dose equivalent rate (H*(10)) and a personal dose equivalent rate (Hp(10)) having different conversion factors to radiation energy.

Becquerel (Bq) is a unit that represents radioactive intensity of a substance that releases radiation.

Becquerel per cubic meter (Bq/m³) is a unit that represents radioactive intensity of a substance that releases radiation and is included per unit volume.

In the embodiment, the calculation unit 14 and the sensor(s) S have a one-to-N (N ≥ 2) relation via the lower network 11, but may have a one-to-one (N = 1) relation via the lower network 11.

The calculation units 14 and the sensors S may have an M-to-N (M, N ≥ 2) relation.

Specifically, the calculation unit 14 of the controller 23a can also calculate various amounts of radiation detected by the sensor S placed in the monitored area 22b, via the upper network 13 and the communication unit B of the controller 23b.

From the perspective of network securities, the communication unit B does not electrically transmit information without any change, but performs a calculation process and data selection.

The calculation unit 14 may receive the data signal sent out by the signal transmitting unit 12 on a regular basis, and may receive the data signal in response to a request from the calculation unit 14.

Because the discrimination ID concerning the sensor S and the time information is given to the data signal, the data signal that is continuously transmitted at a large amount can be efficiently converted into various amounts by the calculation unit 14 on the network.

Further, because data information of the converted various amounts also contains the discrimination ID concerning the sensor S and the time information, data handling is facilitated for data processing devices such as the display unit 15 and a various amount storing unit 17 on the upper network 13.

Here, the discrimination ID is used without any change for data display of the converted various amounts, but the discrimination ID may be converted into another discrimination information (such as a tag number) with reference to a conversion table defined in advance by the calculation unit, and the another discrimination information may be used for discrimination.

In the monitored area 22a, only the sensor S that transmits a data signal to the lower network 11 is placed.

In the monitored area 22b, a sampler 42 is provided, and the sampler 42 collects aerosols having radionuclides attached thereto and existing in the air, by means of a filter. Radiation from each collected radionuclide is measured by the sensor S provided to the sampler 42.

A device actuating unit 41 a that controls an operation of the sampler 42 is connected to the sampler 42.

The device actuating unit 41a receives an operation signal for actuating the sampler 42, from an actuation operating unit 18 in the central control area 21 via the network.

Further in the monitored area 22b, an on-site alarm/operation device 43 that issues an alarm and transmits communication information on site is provided.

A device actuating unit 41 b is connected to the on-site alarm/operation device 43. The device actuating unit 41 b receives an operation signal from the actuation operating unit 18 in the central control area 21 via the network, and controls an operation of the on-site alarm/operation device 43.

In the monitored area 22c, a portable sensor S is placed.

The signal transmitting unit 12 provided to the portable sensor S transmits a data signal to the lower network 11 via an access point 44 through radio communications.

A terminal device (not illustrated) carried by a maintenance worker who stays in the monitored area 22c can be connected to the access point 44.

The display unit 15 is provided to an operating station (not illustrated) that is an interface with an operator, and displays information on various amounts received via the upper network 13 in accordance with the discrimination ID.

The actuation operating unit 18 is similarly provided to the operating station (not illustrated), and remotely operates the on-site alarm/operation device 43 and the like placed in the monitored area 22.

A control definition information transmitting unit 16 is provided to an engineering station (not illustrated) that performs setting and maintenance of devices on the network, and transmits: control definition information for defining a control operation of each calculation unit 14; and configuration information of the radiation monitoring system 10, via the upper network 13.

The various amount storing unit 17 is configured by a recording apparatus such as a HDD provided to a server station (not illustrated), and stores various amounts that are received via the upper network 13 using the discrimination ID as a key.

The various amount storing unit 17 can also store data information that serves as a base for calculating the various amounts, in association with the various amounts.

The operating station (not illustrated), the engineering station (not illustrated), and the server station (not illustrated) are connected to an information network (not illustrated), and can publish necessary information to the outside via a gateway.

According to the radiation monitoring system 10 of the present embodiment, a data signal based on an output of the sensor S is subjected to network transmission and a calculation process using the discrimination ID as a key. Hence, simplification in logic design and reduction in transmission engineering can be achieved, and engineering work efficiency can be enhanced.

Further, restrictions on hardware are small in changing a scale of the radiation monitoring system 10. Hence, the number of the sensors S for monitoring radiation can be easily increased/decreased, and logics can be easily changed.

In addition, even in a case where part of the plurality of calculation units 14 breaks down, alternatives thereto can be easily prepared, and other calculation units 14 that do not break down can serve as alternatives thereto if logics of the other calculation units 14 are changed. Hence, restoration time can be shortened.

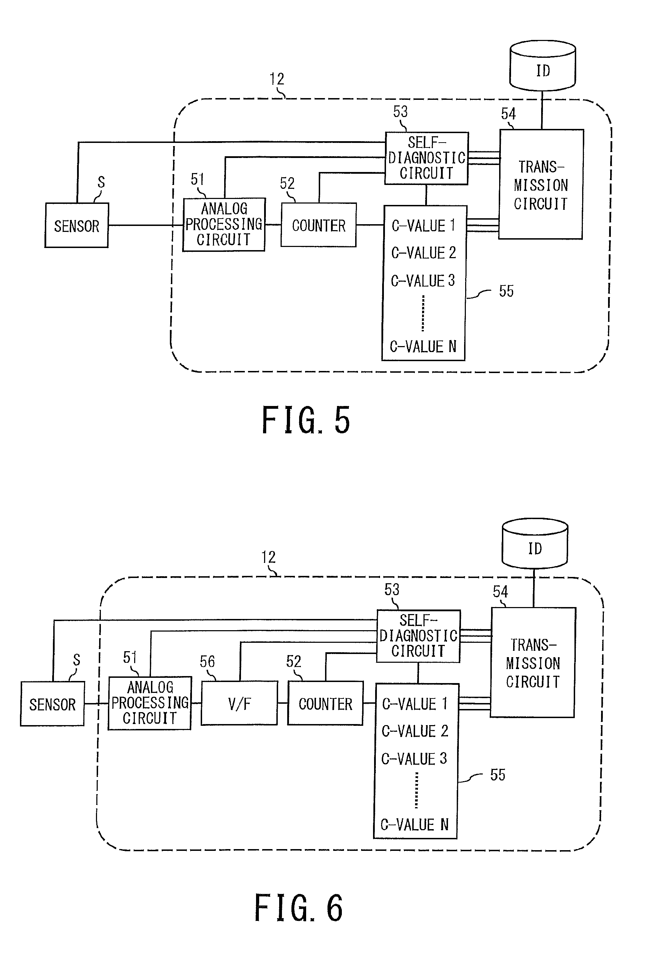

With reference to schematic diagrams of Fig. 5 to Fig. 12 configurations of the signal transmitting unit 12 of the sensor S applied to the radiation monitoring system 10 of the present embodiment are described.

The signal transmitting unit 12 illustrated in Fig. 5 includes: an analog processing circuit 51 that performs denoising and waveform shaping on an analog signal outputted by the sensor S; a counter 52 that counts pulses each having a crest value equal to or more than a given value, for a given time; a cyclic memory 55 that cyclically stores count values (c-value 1-N) outputted from the counter 52; a self-diagnostic circuit 53 that self-diagnoses each function; and a transmission circuit 54.

A time stamp (time information) can be given to each piece of data stored in the cyclic memory 55.

The signal transmitting unit 12 illustrated in Fig. 5 having such a configuration as described above can transmit the number of events concerning radiation for each given time, to the calculation unit 14 via the lower network 11.

The signal transmitting unit 12 illustrated in Fig. 6 includes: the analog processing circuit 51 that performs current/voltage conversion, denoising, and waveform shaping on an analog signal outputted by the sensor S; a voltage/frequency (V/F) converting unit 56 that generates periodic pulses according to a voltage value; the counter 52 that counts pulses for a given time; the cyclic memory 55 that cyclically stores count values (c-value 1-N) outputted from the counter 52; the self-diagnostic circuit 53 that self-diagnoses each function; and the transmission circuit 54.

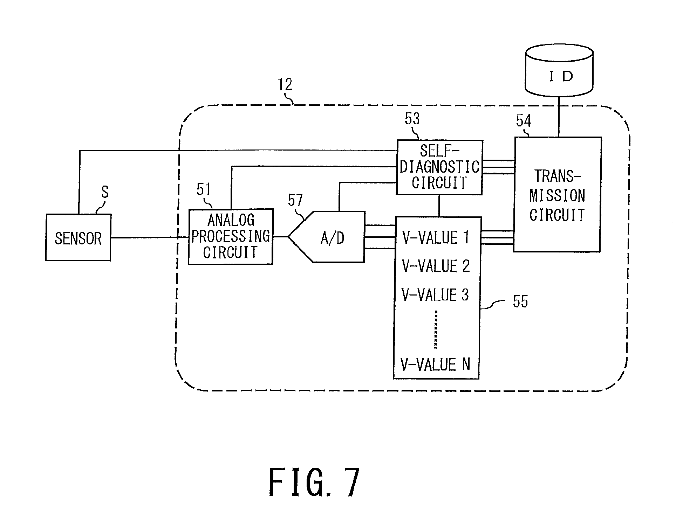

The signal transmitting unit 12 illustrated in Fig. 7 includes an A/D converter 57 instead of the V/F converting unit 56, whereby a voltage value (v-value) obtained through current/voltage conversion is directly read.

The signal transmitting unit 12 illustrated in each of Figs. 6 and 7 having such a configuration as described above can transmit a sensor current obtained in proportion to the number of events concerning radiation for each given time, to the calculation unit 14 via the lower network 11.

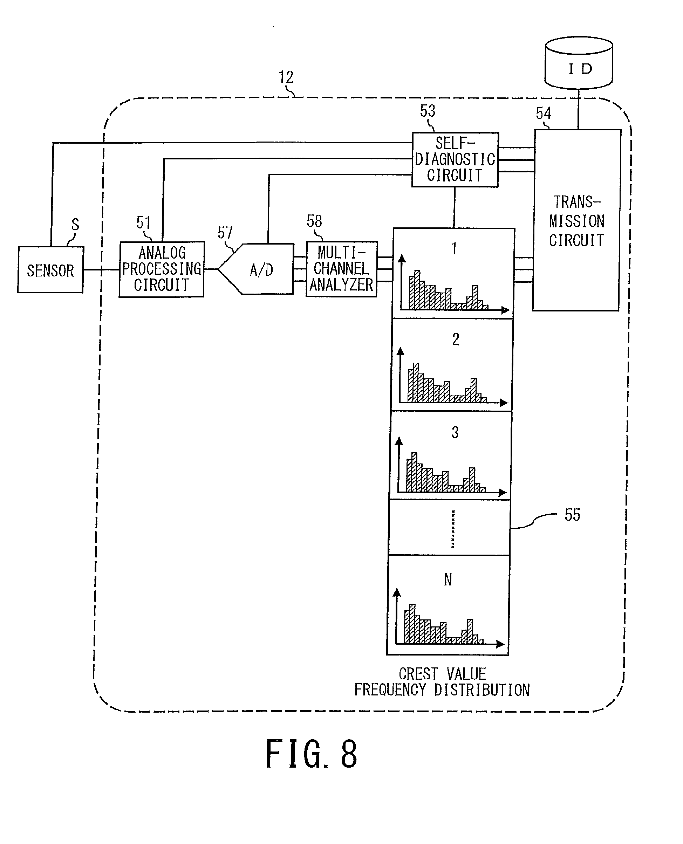

The signal transmitting unit 12 illustrated in Fig. 8 includes: the analog processing circuit 51 that performs denoising and waveform shaping on an analog signal outputted by the sensor S; the A/D converter 57; a multi-channel analyzer (MCA) 58; the cyclic memory 55 that cyclically stores frequency distribution combinations of crest values for each given time; the self-diagnostic circuit 53 that self-diagnoses each function; and the transmission circuit 54.

The signal transmitting unit 12 illustrated in Fig. 8 having such a configuration as described above can transmit frequency distribution of crest values proportional to energy that is given by radiation to the sensor S, to the calculation unit 14 via the lower network 11 for each given time.

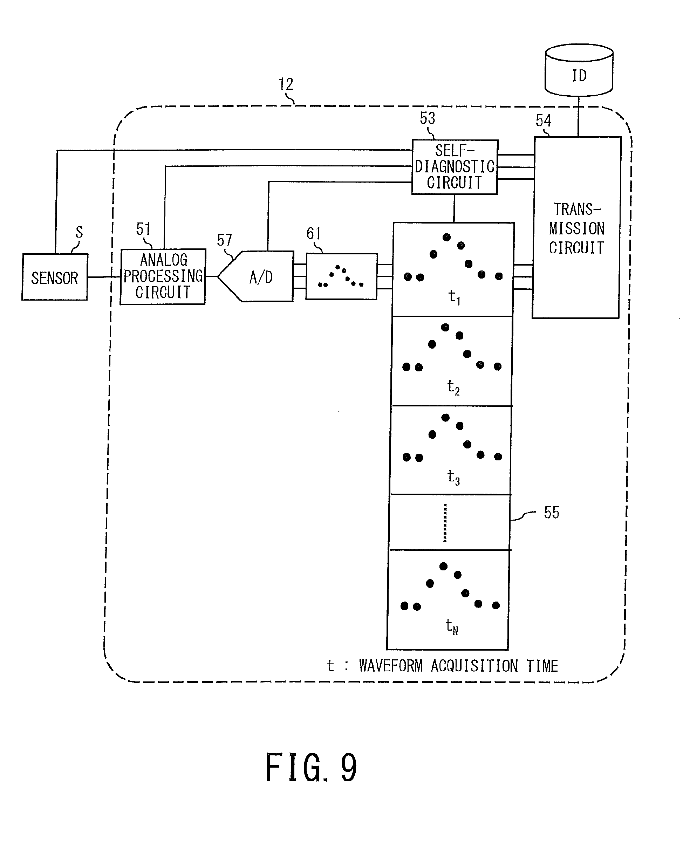

The signal transmitting unit 12 illustrated in Fig. 9 includes: the analog processing circuit 51 that performs denoising and waveform shaping on an analog signal outputted by the sensor S; the A/D converter 57; a waveform temporary memory 61; the cyclic memory 55 that cyclically stores waveform data in combination with waveform acquisition time t; the self-diagnostic circuit 53 that self-diagnoses each function; and the transmission circuit 54.

A digital filter (not illustrated) for denoising of acquired waveforms may be added in a stage subsequent to the A/D converter 57.

The denoising by the digital filter includes denoising in a frequency domain through Fourier transform and wavelet transform.

The signal transmitting unit 12 illustrated in Fig. 9 having such a configuration as described above can transmit a waveform that is outputted by the radiation sensor when radiation enters the radiation sensor, to the calculation unit 14 via the lower network 11.

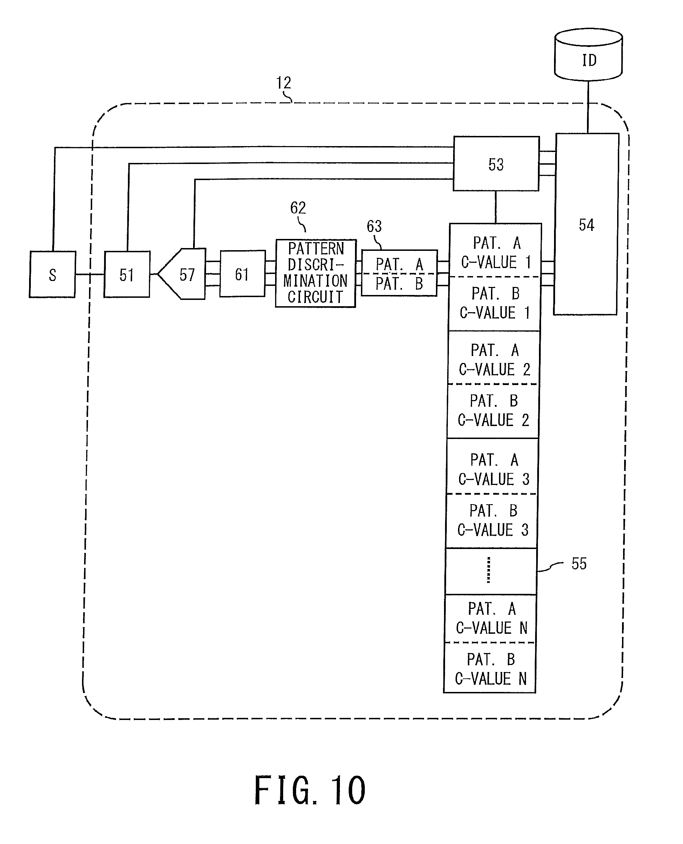

The signal transmitting unit 12 illustrated in Fig. 10 includes: the analog processing circuit 51 that performs denoising and waveform shaping; the A/D converter 57; the waveform temporary memory 61; a pattern discrimination circuit 62; a pattern-based counter 63; the cyclic memory 55 that cyclically stores count values for each pattern; the self-diagnostic circuit 53 that self-diagnoses each function; and the transmission circuit 54.

The signal transmitting unit 12 illustrated in Fig. 10 having such a configuration as described above can transmit the counted number of each pattern after discrimination through waveform feature extraction, to the calculation unit 14 via the lower network 11 for each given time.

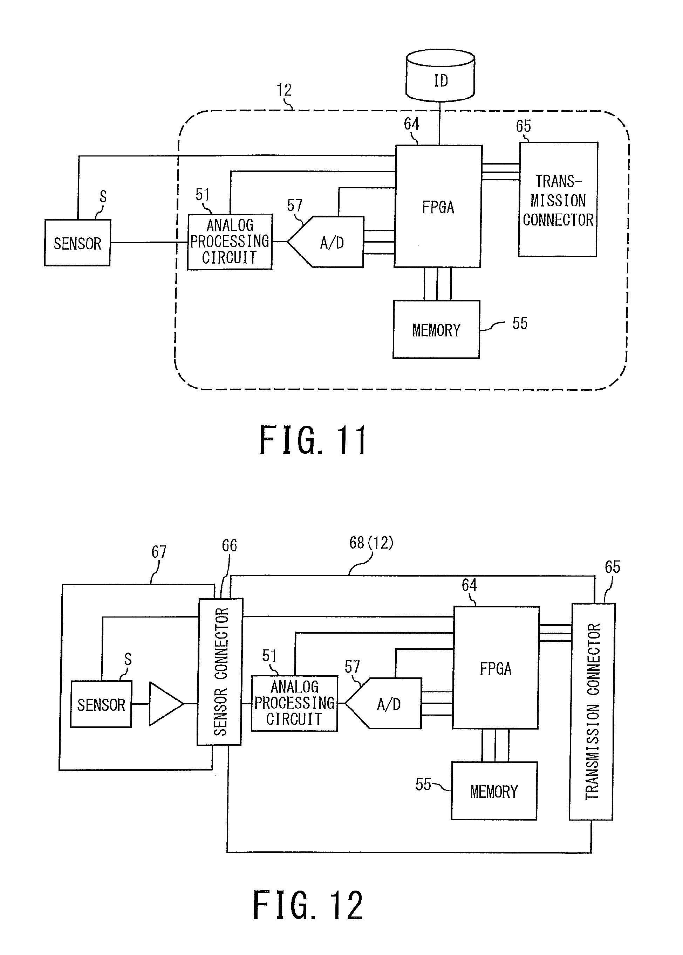

The signal transmitting unit 12 illustrated in Fig. 11 includes: the analog processing circuit 51 that performs denoising and waveform shaping; the A/D converter 57; a FPGA 64; the memory 55; and a transmission connector 65.

In the FPGA 64, programmable logic components can be freely combined to achieve functions of the self-diagnostic circuit 53, the counter 52, the multi-channel analyzer 58, and the pattern discrimination circuit 62 in Fig. 5 to Fig. 10. This enables unification of a hardware configuration of the signal transmitting unit 12.

In this way, in the radiation monitoring system 10, fixed signal processing is performed by each signal transmitting unit 12 on which the sensor S is mounted.

Then, processing such as alarm level determination and conversion into various amounts of radiation is performed by the calculation unit 14 on the network, on the basis of data signals outputted by the signal transmitting unit 12.

If a time stamp (time information) is given to each data signal outputted by the signal transmitting unit 12, simultaneity of radiation detection among the sensors S can be obtained, and measurement with higher accuracy can be achieved. Examples of the achievable processes include: measurement focused on radioactivity that simultaneously releases a plurality of radiations during one decay; and estimation of ambient influences through extraction of a relationship of a plurality of sensor outputs due to leakage from a particular site.

Because data signals outputted by the signal transmitting unit 12 are accumulated in the various amount storing unit 17 on the upper network 13, even an event that is not expected at the time of system introduction can be analyzed after the fact.

Specifically, with regard to: a target to be measured in each monitored area 22; a reactor core including a fissionable substance in a case of a nuclear fission reactor; a plasma confinement container in a case of a nuclear fusion reactor; and processing equipment of radioactive wastes in a case of a radioactive waste disposal facility, parameters such as pressure, temperature, and water level other than radiation are monitored, pieces of data information concerning control of valves, pumps, and the like are integrated, and simultaneity of the pieces of data information is analyzed, whereby effective findings may be newly obtained.

An embodiment of the sensor S and the signal transmitting unit 12 applied to the radiation monitoring system of the present embodiment is described with reference to Fig. 12. A circuit configuration is the same as that in Fig. 11, and hence description thereof is omitted.

In the embodiment, a sensor module 67 on which the sensor S and a preamplifier are mounted and a circuit board 68 on which an element circuit of the signal transmitting unit 12 is mounted are separably and detachably connected to each other by a sensor connector 66.

With such a configuration, only the sensor module 67 can be detached to be replaced or calibrated.

With regard to normal measurement amounts such as temperature and mass, inaccuracy of a calibration capability of a standard laboratory in each country is in 10⁻⁴ order or less, which is sufficiently low. Hence, equivalence in measurement standards between countries can be accepted by a counterpart in many cases, through key comparison of a measurement laboratory in each country and with the utilization of a global mutual recognition agreement (CIPM-MRA) concerning measurement standards.

On the other hand, with regard to radiation and radioactivity, the inaccuracy of the standard laboratory is in several-percent order.

Accordingly, even if a difference in calibration capability of a measurement laboratory is within a range of inaccuracy, regulatory authorities may determine that the difference cannot be ignored.

Further, with regard to nuclides restricted by Laws Concerning the Prevention from Radiation Hazards in each country, calibration according to actual measurement amounts and actual measurement conditions may not be possible.

In addition, at the time of national-level grappling with industrial standards in which an examination method is defined, exceptional matters may be provided to actual international standards, and identity may not necessarily be secured.

Under the circumstances, there may be a country in which a framework of the CIPM-MRA cannot be accepted for calibration results concerning radiation and radioactivity.

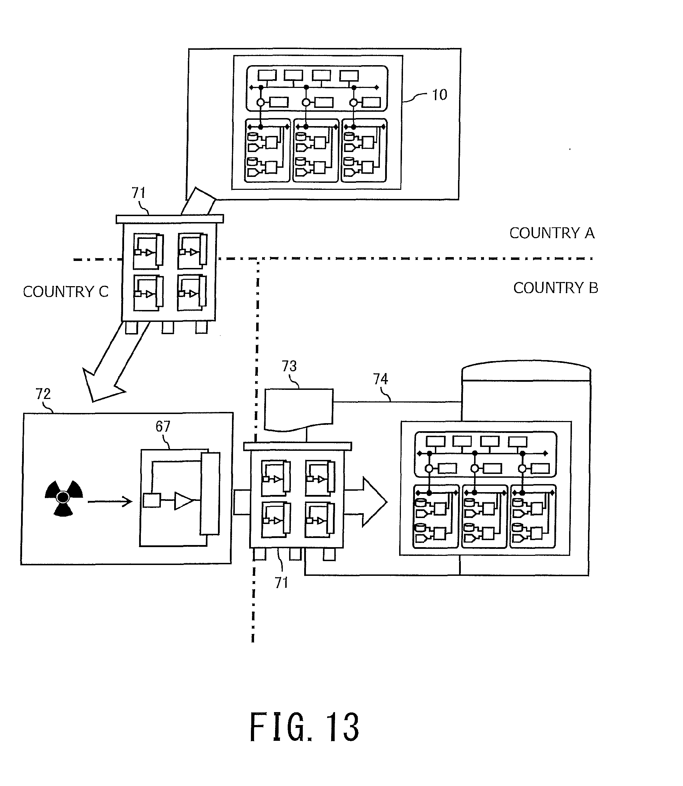

As illustrated in Fig. 13, a complete correspondence relation concerning national measurement standards of radiation and radioactivity may not exist between a country A in which the radiation monitoring system 10 is manufactured and a country B in which the radiation monitoring system 10 is installed. Meanwhile, it is assumed that the county B is compliant with measurement standards in a country C.

In such a case, a package 71 obtained by packing the sensor module 67 (Fig. 12) is sent to a calibration institution 72 in the country C, and can be certified in the country C.

The package 71 of the sensor module 67 certified in the country C is sent to a nuclear power plant 74 in the country B in which the sensor module 67 is to be installed, together with a calibration certification 73, and is installed in an on-site area in the country B.

Particularly in developing countries, radiation and radioactivity calibration may not be completed by themselves. In such a case, the sensor module 67 is separated to be delivered to another country capable of the calibration, whereby measurement traceability can be certified.

According to the radiation monitoring system of at least one embodiment described above, a data signal based on an output of the sensor is transmitted to the calculation unit via the network, and the calculation unit calculates various amounts of radiation, whereby system expandability and maintainability are enhanced.

Some embodiments of the present invention have been described above, but these embodiments are given as mere examples and are not intended to limit the scope of the present invention. These embodiments can be carried out in various other modes, and can be variously omitted, replaced, changed, and combined within a range not departing from the gist of the present invention. These embodiments and modifications thereof are included in the scope and gist of the present invention, and are also included in the invention described in the claims and a range equivalent thereto.

Constituent elements of the radiation monitoring system can be achieved by a processor of a computer, and can be operated by a radiation monitoring program.

## Claims

1. A radiation monitoring system comprising:
a signal transmitting unit;
a calculation unit; and
a display unit, wherein
the signal transmitting unit gives a discrimination ID of a sensor that detects radiation, to a data signal based on an output of the sensor, and transmits the data signal to a lower network;
the calculation unit calculates various amounts on a basis of the data signal that is received via the lower network using the discrimination ID as a key, and transmits the various amounts to an upper network; and
the display unit displays information on the various amounts that are received via the upper network using the discrimination ID as a key.

2. The radiation monitoring system according to claim 1, wherein
a plurality of the lower networks are placed, and
the calculation unit is provided correspondingly to each of the lower networks.

3. The radiation monitoring system according to claim 1, further comprising a control definition information transmitting unit that transmits control definition information for controlling the calculation unit, via the upper network.

4. The radiation monitoring system according to claim 1, further comprising a various amount storing unit that stores the various amounts that are received via the upper network using the discrimination ID as a key.

5. A radiation monitoring method comprising the steps of:
giving a discrimination ID of a sensor that detects radiation, to a data signal based on an output of the sensor, and transmitting the data signal to a lower network;
calculating various amounts on a basis of the data signal that is received via the lower network using the discrimination ID as a key, and transmitting the various amounts to an upper network; and
displaying information on the various amounts that are received via the upper network using the discrimination ID as a key.

6. A radiation monitoring program causing a computer to execute the steps of:
giving a discrimination ID of a sensor that detects radiation, to a data signal based on an output of the sensor, and transmitting the data signal to a lower network;
calculating various amounts on a basis of the data signal that is received via the lower network using the discrimination ID as a key, and transmitting the various amounts to an upper network; and
displaying information on the various amounts that are received via the upper network using the discrimination ID as a key.
